# EUROPÄISCHE PATENTSCHRIFT

(11) **EP 3 490 135 B1**
(45) Veröffentlichungstag und Bekanntmachung des Hinweises auf die Patenterteilung: **25.08.2021**
(21) Anmeldenummer: 18197830.5
(22) Anmeldetag: 01.10.2018
(51) Int. Cl.: H02N 2/18

(54) **PIEZOELEKTRISCHER GENERATOR**
PIEZOELECTRIC GENERATOR
GÉNÉRATEUR PIÉZOÉLECTRIQUE

(30) Priorität: 09.11.2017 DE 102017126206
(43) Veröffentlichungstag der Anmeldung: 29.05.2019
(73) Patentinhaber: MAN Truck & Bus SE, 80995 München (DE)
(72) Erfinder: Graf zu Solms-Baruth, Clemens, 85250 Altomünster (DE)
(74) Vertreter: v. Bezold & Partner Patentanwälte - PartG mbB

(56) Entgegenhaltungen:
- DE-A1- 10 054 398
- DE-A1-102005 032 955
- DE-A1-102009 001 163
- DE-A1-102013 204 102
- US-A- 5 068 565

## Beschreibung

Die Erfindung betrifft einen piezoelektrischen Generator, der die Bewegungsenergie einer antreibbaren Exzenterwelle durch das Verspannen mindestens einer Piezoeinheit in elektrische Energie umwandelt. Ferner betrifft die Erfindung ein Fahrzeug, insbesondere Nutzfahrzeug, welches einen derartigen piezoelektrischen Generator umfasst.

Aus dem Stand der Technik sind Vorrichtungen zur Umwandlung einer mechanischen Bewegung in eine elektrische Spannung mittels des piezoelektrischen Effekts bekannt. Neben Anwendungen bei Feuerzeugen, Sensoren oder Tonabnehmern existieren auch Ansätze, die Deformation piezoelektrischer Materialien in Generatoren zur Stromerzeugung zu verwenden. So offenbaren die Offenlegungsschriften DE 10 2009 001 163 A1 und DE 10 2013 204 102 A1 piezoelektrische Generatoren, welche radial zur Drehachse angeordnete Piezoeinheiten umfassen, die durch eine Exzentrizität der Generatorwelle periodisch gestaucht bzw. verspannt werden und dadurch eine Wechselspannung erzeugen. In beiden Fällen ist vorgesehen, dass die Piezoeinheiten dabei zwischen einem koaxial zur Drehachse der Generatorwelle angeordneten Außenring und einem durch die Generatorwelle exzentrisch verlagerbaren, jedoch drehfest zum Außenring angeordneten Innenring verspannt werden. Durch diese Konstruktion werden zwar axiale Scherkräfte auf die Piezoeinheiten sowie Reibungskräfte zwischen der Piezoeinheit und der Exzenterwelle minimiert, allerdings ist diese Art des Aufbaus schwierig zu fertigen, da alle Bauteile nur geringe Fertigungstoleranzen aufweisen dürfen. Ein zu starkes Vorverspannen der Elemente führt im Betrieb zu einem Blockieren oder zur Zerstörung der Piezoeinheiten, eine Spielpassung zu einer stark eingeschränkten oder keinerlei Funktion des Generators. Darüber hinaus ist im Fall von Wartungsarbeiten ein komplettes Demontieren der Generatoren nötig, da bei beiden Konstruktionen das Generatorgehäuse nach außen vollständig geschlossen ist und kein modularer Aufbau vorgesehen ist.

Aus der US 5,068,565 sind weitere Konstruktionsvarianten für piezoelektrische Generatoren bekannt, die alle ebenfalls auf dem Prinzip des periodischen Verspannens von Piezoeinheiten durch den Hub einer Exzenterwelle beruhen. Hierbei wird der Hub der Exzenterwelle allerdings nicht unmittelbar, sondern über verschiedene Hubübertragungseinrichtungen an die vorgespannten Piezoeinheiten weitergeleitet. Die dort offenbarten Arten von Hubübertragungseinrichtungen ermöglichen zwar ein einfacheres Einstellen der Vorspannung der Piezoeinheiten, nachteilig sind allerdings die oftmals hohe Anzahl an Einzelteilen und der hohe Bauraumbedarf. Zudem ist auch bei diesen Konstruktionen kein Zugang außen am Gehäuse vorgesehen, was die Wartung und den Einbau erschwert.

Ferner offenbart die DE 10 2005 032 955 A1 einen Piezomotor mit einem Gehäuse, einer in Rotation versetzbaren Welle, einem in Schwingung versetzbaren Antriebskörper zum Versetzen der Welle in eine solche Rotation und zumindest zwei Festkörperaktor-Einheiten zum Versetzen des Antriebskörpers in eine solche Schwingung relativ zum Gehäuse. Die zumindest zwei Festkörperaktor-Einheiten sind dabei - von außen zugänglich - am Gehäuse fixiert und stehen über zugehörige Öffnungen im Gehäuse mit dem gemeinsamen Antriebskörper in Kontakt. Zwar ermöglicht diese Ausgestaltung der Antriebsvorrichtung eine Wartung bzw. einen Austausch der Antriebskörper von außen, allerdings besteht auch hier die Problematik des Einstellens eines geeigneten Spaltmaßes, welches einerseits einen ausreichenden Kontakt zwischen den Festkörperaktor-Einheiten und dem Antriebskörper sicherstellt, gleichzeitig aber ein Verspannen verhindert.

Die Aufgabe der Erfindung ist deshalb, eine verbesserte Konstruktion eines piezoelektrischen Generators bereitzustellen, mit der Nachteile herkömmlicher Techniken vermieden werden. Insbesondere liegt der Erfindung die Aufgabe zugrunde, einen einfach zu wartenden piezoelektrischen Generator bereitzustellen, der eine kompakte und einfache Bauform aufweist.

Diese Aufgaben werden durch eine Vorrichtung mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figur näher erläutert.

Gemäß einem ersten allgemeinen Gesichtspunkt der Erfindung wird ein piezoelektrischer Generator bereitgestellt, der mindestens eine Piezoeinheit, die zur Erzeugung eines Wechselstroms verspannbar ist, eine antreibbare, das Verspannen steuernde Exzenterwelle und eine Hubübertragungseinrichtung, über die die Piezoeinheit in Wirkverbindung mit der Exzenterwelle steht, so dass die Piezoeinheit im Wesentlichen in Radialrichtung zur Drehachse der Exzenterwelle verspannbar ist, umfasst. Darüber hinaus umfasst der piezoelektrische Generator ein um die Exzenterwelle angeordnetes Gehäuse, an dem die Piezoeinheit mittels einer Montageeinrichtung befestigt ist, wobei die Piezoeinheit außerhalb des Gehäuses angeordnet ist und die Hubübertragungseinrichtung über eine Durchgangsöffnung im Gehäuse in Wirkverbindung mit der Piezoeinheit steht.

Unter dem Begriff Exzenterwelle soll dabei eine drehbare Welle verstanden werden, welche zumindest bereichsweise mindestens einen exzentrischen Bereich aufweist, der als Vorsprung, Nocken oder sonstige die Rotationssymmetrie brechende Anformung ausgebildet sein kann. Alternativ kann die Exzenterwelle auch als exzentrisch gelagerte Welle mit kreisförmigem Querschnitt ausgebildet sein. Die Exzentrizität der Welle bewirkt, dass bei einer Rotationsbewegung der Exzenterwelle um eine Drehachse in Längsrichtung der Welle eine Hubbewegung in radialer Richtung zur Drehachse erzeugt wird, wobei die Rotationsbewegung regelmäßig, insbesondere periodisch, aber auch ungleichmäßig erfolgen kann.

Die so erzeugte Hubbewegung wird mittels einer Hubübertragungseinrichtung zu der mit Abstand zur Exzenterwelle angeordneten Piezoeinheit weitergeleitet und führt bei dieser zu einem Verspannen, insbesondere Stauchen und Entlasten, wobei die Art und Anzahl der Verspannvorgänge pro Umdrehung der Exzenterwelle durch die exakte Form, Anzahl und Anordnung der Exzentrizitäten bestimmt werden. Erfindungsgemäß erfolgt hierbei das Verspannen, d. h. die Zug-/Druckbelastung, der Piezoeinheit im Wesentlichen in Radialrichtung zur Drehachse der Exzenterwelle. Mit anderen Worten sind die Befestigung der Piezoeinheit, der Kontakt zwischen Piezoeinheit und Hubübertragungseinrichtung und die Richtung der Krafteinwirkung auf die Piezoeinheit durch die Hubübertragungseinrichtung so ausgelegt, dass die Piezoeinheit vor allem in radialer Richtung verspannt wird und dabei möglichst keine Biege- oder Scherbewegungen vollführt. Die Radialrichtung ist dabei wie auch im Folgenden immer auf die Drehachse der Exzenterwelle bezogen.

Bei der Piezoeinheit handelt es sich um einen elektromechanischen Wandler, der - vorzugsweise über eine Ladungsverschiebung im Material der Piezoeinheit - eine mechanische Krafteinwirkung in eine elektrische Spannung umsetzt. Beispielsweise kann es sich hierbei um Piezokristalle oder piezoelektrische Keramiken handeln. Durch eine entsprechende Beschaltung wird diese Spannung an der Oberfläche der Piezoeinheit abgegriffen und optional mittels nachgeschalteter Elektronik, beispielsweise einer Gleichrichterschaltung, aufbereitet. Dadurch ist es möglich, elektrische Energie aus der Bewegung einer rotierenden Exzenterwelle zu erzeugen, wobei die Exzenterwelle einen Teil einer Anlage oder eines Fahrzeugs darstellen kann. Beispielsweise kann der piezoelektrische Generator durch eine entsprechende Kopplung an einen Fahrzeugmotor oder eine Fahrzeugachse zur Energiegewinnung bzw. Bremsenergierückgewinnung genutzt werden.

Um eine einfache Wartung der Vorrichtung zu ermöglichen, ist erfindungsgemäß vorgesehen, die Piezoeinheit mittels einer Montageeinrichtung außerhalb am Gehäuse zu befestigen. Als Gehäuse wird hierbei ein Bauteil verstanden, welches neben tragenden Funktionen insbesondere eine Schutzfunktion der Bauteile innerhalb des Gehäuses übernimmt, indem es diese möglichst allseitig oder zumindest abschnittsweise umgibt. Als außerhalb des Gehäuses, welches beispielsweise als Wandung oder Ummantelung ausgebildet sein kann, wird dabei der Bereich verstanden, der in radialer Richtung einen größeren Abstand zur Drehachse der Exzenterwelle als das Gehäuse oder zumindest als die Innenfläche des Gehäuses besitzt. Weist das Gehäuse eine gewisse Ausdehnung in radialer Richtung auf, so kann nach vorheriger Definition auch der Bereich innerhalb der Wandung bereits als außenliegend gesehen werden. Ferner umfasst die Gehäusewand eine Durchgangsöffnung, um eine für die Funktion der Vorrichtung notwendige Wirkverbindung zwischen der außerhalb des Gehäuses angeordneten Piezoeinheiten und der sich ins Innere des Gehäuses erstreckenden Hubübertragungseinrichtung zu ermöglichen.

Gemäß der Erfindung weist die Hubübertragungseinrichtung einen federnd verspannten, in Radialrichtung zur Drehachse der Exzenterwelle beweglich geführten Übertragungsstift und eine Führungshülse, in der der Übertragungsstift beweglich geführt ist, auf. Die Führungshülse kann dabei am Gehäuse im Bereich der Durchgangsöffnung befestigt sein. Das federnde Verspannen des Übertragungsstifts gewährleistet, dass trotz der ständigen Verlagerung der Exzenterwelle im Betrieb ein ununterbrochener mechanischer Kontakt zwischen der Exzenterwelle und dem Übertragungsstift besteht. Dies kann beispielsweise mittels einer Ankopplung des Übertragungsstiftes an eine mechanische Feder erfolgen, sodass der Übertragungsstift durch die rückstellende Federkraft durchgängig an die Exzenterwelle gedrückt wird. Vorzugsweise wird dabei die Federhärte so gewählt, dass einerseits ein genügend hoher Anpressdruck zwischen Exzenterwelle und Übertragungsstift erzeugt werden kann, andererseits eine ausreichende Beweglichkeit des Übertragungsstiftes und der Exzenterwelle sichergestellt werden kann.

Der Übertragungsstift kann als länglicher, vorzugsweise zylinderförmiger, starrer Stift ausgebildet sein. Bei der im Bereich der Durchgangsöffnung form-, kraft- und/oder stoffschlüssig am Gehäuse angebrachten Führungshülse kann es sich um ein vom Gehäuse separates Bauteil in Form eines länglichen starren Hohlkörpers handeln, der den Übertragungsstift in Längsrichtung abschnittsweise umgibt. Bevorzugt entspricht dabei der Außenquerschnitt der Führungshülse im Bereich der Durchgangsöffnung im Wesentlichen dem Querschnitt der Durchgangsöffnung. Der Innenquerschnitt der Führungshülse ist dabei vorzugsweise so ausgebildet, dass sie Bewegungen des Übertragungsstiftes tangential zur Drehachse der Exzenterwelle verhindert und so zu einer Stabilisierung der Hubübertragungseinrichtung beiträgt. Insgesamt wird dadurch eine einfache und somit wenig fehleranfällige Einrichtung zur Hubübertragung bereitgestellt, die zudem aufgrund der wenigen Bauteile nur geringe Reibungsverluste besitzt.

Eine Weiterentwicklung der Ausführung sieht vor, dass sich die Führungshülse durch die Durchgangsöffnung erstreckt und ein der Piezoeinheit zugewandter Endbereich der Führungshülse außerhalb des Gehäuses endet, welcher dann als Halterung zur Anbringung der Piezoeinheit dienen kann. Zudem oder alternativ erstreckt sich der Übertragungsstift durch die Durchgangsöffnung, und ein der Piezoeinheit zugewandter Endbereich des Übertragungsstifts endet außerhalb des Gehäuses. Mit anderen Worten weist der in Radialrichtung außerhalb liegende Endbereich der Führungshülse und/oder des Übertragungsstifts in Radialrichtung einen größeren Abstand zur Drehachse der Exzenterwelle auf als die Außenwand des Gehäuses. Dadurch können diese Bauteile beispielsweise bei Wartungsarbeiten von außen erreicht werden, ohne das Gehäuse des Generators öffnen zu müssen.

In einer bevorzugten Ausgestaltungsform weist die Hubübertragungseinrichtung eine Feder auf, welche den Übertragungsstift umgibt. Um dabei den Übertragungsstift gegen die Führungshülse zu verspannen, kann ein erstes Federende an einem der Exzenterwelle zugewandten Endbereich des Übertragungsstifts und ein zweites Federende an der Führungshülse befestigt sein, wodurch ein platzsparendes Verspannen des beweglich geführten Übertragungsstifts erreicht wird. Vorzugsweise handelt es sich bei der Feder um eine Schraubenfeder, allerdings kann auch eine Kegel-, Evolut-, Ring- und/oder jede andere Art von Feder verwendet werden, die am Endbereich des Übertragungsstifts und der Führungshülse so befestigt werden kann, dass sie den Übertragungsstift in Längsrichtung zumindest abschnittsweise umfangseitig umgibt.

Eine Weiterbildung dieser Ausführungsform sieht vor, dass der der Exzenterwelle zugewandte Endbereich des Übertragungsstifts gleitend an einer Innenwandung der Führungshülse geführt ist und sich an diesen Endbereich des Übertragungsstifts ein zweiter Abschnitt mit einer kleineren Querschnittsfläche anschließt, der von der Feder umgeben ist. Der Begriff der Querschnittsfläche bezieht sich hierbei auf eine Ebene senkrecht zur Längsrichtung des Übertragungsstifts. Vorzugsweise berühren sich der Endbereich des Übertragungsstifts und die Innenwandung der Führungshülse zumindest abschnittsweise. Insgesamt lässt sich so die Stabilität der Konstruktion erhöhen, da Bewegungen des Übertragungsstiftes axial oder tangential zur Drehachse der Exzenterwelle verhindert werden. Die Ausführung des Übertragungsstifts in zwei Abschnitten mit unterschiedlichen Querschnittsflächen bietet zudem den Vorteil, dass am Übergang des Abschnitts mit größerer Querschnittsfläche zum Abschnitt mit kleinerer Querschnittsfläche ein Auflage- bzw. ein Befestigungspunkt für die Feder geschaffen werden kann.

Ferner kann die zum Verspannen des Übertragungsstifts verwendete Feder so befestigt sein, dass sich ein Federende an dem der Exzenterwelle zugewandten Endbereich des Übertragungsstifts abstützt und/oder das zweite Federende sich an einem Vorsprung eines der Piezoeinheit zugewandten Endbereichs der Führungshülse abstützt. Der Endbereich des Übertragungsstifts und/oder Vorsprung nimmt dabei die Druckkräfte der Feder auf und erhöht durch den zusätzlichen Halt für die Feder die Stabilität.

Eine weitere alternative Ausgestaltungsform sieht vor, dass eine der Exzenterwelle zugewandte Stirnseite des Übertragungsstifts eine Kugel, insbesondere in Form einer in die Stirnseite eingepressten Kugel, aufweist, mittels derer der Übertragungsstift auf einem der Exzenterwelle umgegebenen Lager in Wirkkontakt steht. Die Kugel liegt hierbei, bedingt durch die Federkraft des federnd verspannten Übertragungsstifts, dauerhaft lose auf dem Lager auf. Als Lager wird hierbei ein Bauteil verstanden, das die Reibung zwischen verschiedenen beweglichen Komponenten reduziert und damit die Bewegung verschiedener Maschinenelemente zueinander erleichtert. Insbesondere kann das Lager als Wälzlager ausgebildet sein, das einen mit der Exzenterwelle drehfest verbunden Innenring, einen deformierbaren, drehfest zum Gehäuse angeordneten Außenring sowie zwischen diesen beiden Ringen eingebrachte Wälzkörper in Form von Kugeln, Rollen, Tonnen oder andere Rotationskörper umfasst. Durch diese bevorzugte Ausgestaltungsform kann durch Einführung einer Rollreibung statt Gleitreibung zwischen Exzenterwelle und Hubübertragungseinrichtung die Reibung zwischen beiden Bauteilen deutlich reduziert werden. Zudem können durch den drehfesten Au-ßenring axiale Scherkräfte auf die Hubübertragungseinrichtung minimiert werden.

Gemäß einer alternativen bevorzugten Ausgestaltungsform weist das Gehäuse einen hohlzylinderförmigen und/oder ringförmigen Querschnitt senkrecht zur Drehachse der Exzenterwelle auf, was die Stabilität des Gehäuses erhöht. Insbesondere kann das Gehäuse dabei konzentrisch um die Drehachse der Exzenterwelle angeordnet sein. Zudem oder alternativ umgibt das Gehäuse die Exzenterwelle lediglich abschnittsweise. Hierbei kann es sich sowohl um einen Abschnitt in Längsrichtung der Exzenterwelle als auch umfangseitig um die Exzenterwelle handeln.

Vorstehend wurde bereits erwähnt, dass die Hubübertragungseinrichtung ein um die Exzenterwelle angeordnetes Lager, insbesondere ein Wälzlager, zur Kraftübertragung zwischen Exzenterwelle und Übertragungsstift aufweisen kann. Hierbei steht der der Exzenterwelle zugewandte Endbereich des Übertragungsstifts in Wirkkontakt mit dem Lager. Durch diese Art der Ausgestaltung können wiederum axiale Scherkräfte sowie Reibungskräfte zwischen Exzenterwelle und Übertragungsstift reduziert werden.

Eine Weiterbildung dieser Ausführungsform sieht vor, dass das Lager eine Nut aufweist, in die der der Exzenterwelle zugewandte Endbereich des Übertragungsstifts eingreift. Der Vorteil liegt darin, dass die Nut als Führungsschiene fungiert und so Bewegungen des Übertragungsstiftes in axialer Richtung zur Drehachse der Exzenterwelle verhindert. Dabei kann die Nut in Form einer länglichen, die Lageraußenfläche umfangseitig umgebenden, rillenförmigen Vertiefung ausgebildet sein. Vorzugsweise kann durch eine entsprechende Anpassung des Querschnitts der Nut und die Form des Endbereichs des Übertragungsstifts ein zumindest abschnittsweise formschlüssiger Kontaktbereich zwischen beiden Bauteilen geschaffen werden.

Gemäß einer weiteren Ausgestaltungsform greift die Kugel, welche die der Exzenterwelle zugewandte Stirnseite des Übertragungsstifts aufweist, in die eben genannte Nut.

In einer bevorzugten Ausführungsform umfasst die Montageeinrichtung einen Aufnahmebehälter sowie einen den Aufnahmebehälter verschließbaren Aufnahmebehälterdeckel. Vorzugsweise handelt es sich bei diesen um gegeneinander bewegliche formkorrespondiere Elemente, die teleskopisch ineinander gesteckt werden können und im geschlossenen Zustand die Piezoeinheit umschließen. Besonders bevorzugt handelt es sich hierbei um becherartige Elemente, wobei die Innenfläche des Aufnahmebehälters an die Dimensionen des Piezoelements angepasst sein kann. Sowohl im Aufnahmebehälter als auch im Aufnahmebehälterdeckel können zudem Durchführungen für elektrische Leitungen vorgesehen sein. Der Aufnahmebehälter und der Aufnahmebehälterdeckel dienen somit einerseits dem mechanischen Schutz der Piezoeinheit von außen, andererseits verhindern sie durch ihre Fixierung axiale oder tangentiale Verschiebungen auf die Piezoeinheit.

Eine Weiterbildung dieser Ausführungsform sieht vor, dass der Aufnahmebehälter so dimensioniert ist, dass die Piezoeinheit bei Einlegen in den Aufnahmebehälter über den dem Aufnahmebehälterdeckel zugewandten Rand des Aufnahmebehälters herausragt und im mit dem Aufnahmebehälterdeckel verschlossenen Zustand des Aufnahmebehälters die Piezoeinheit durch den Aufnahmebehälterdeckel zum Vorverspannen der Piezoeinheit einem Anpressdruck ausgesetzt ist. Zudem oder alternativ sind Mittel vorgesehen, mittels derer eine Vorspannung der Piezoeinheit im Aufnahmebehälter variabel festlegbar ist. Die Mittel können dabei Arten von Verschraubungen, die beispielsweise am Aufnahmebehälterdeckel befestigt sind und/oder zusätzliche zwischen Piezoeinheit und Aufnahmebehälterdeckel eingebrachte Dämpfungselemente umfassen. Durch diese lassen sich zum einen Toleranzen bei der Fertigung der Bauteile ausgleichen, zum andern ermöglicht das gezielte Vorspannen der Piezoeinheiten auch eine Ausbeute an elektrischer Energie.

Nach einer Weiterbildung der Erfindung ist ein der Exzenterwelle zugewandter Endbereich des Aufnahmebehälters in einer hierzu formkorrespondierenden Aufnahme der Führungshülse gehaltert und steht zudem in Wirkkontakt mit dem Übertragungsstift. Hierbei kann eine der Piezoeinheit zugewandte Stirnseite des Übertragungsstifts dauerhaft lose an dem der Exzenterwelle zugewandten Endbereich des Aufnahmebehälters anliegen;

Zudem oder alternativ umfasst die Montageeinrichtung eine Arretierung, durch welche der Aufnahmebehälterdeckel an der Führungshülse befestigt ist. Die Arretierung zum Feststellen der beiden Bauteile kann dabei in Form einer Schraub-, Spann- oder Klemmvorrichtung ausgebildet sein. Insbesondere kann diese eine Klemmschelle umfassen. Die außerhalb des Gehäuses befindliche Arretierung erlaubt im Fall von Wartungsarbeiten ein leichtes Lösen des Aufnahmebehälters und damit einen einfachen Zugang zu den Piezoeinheiten und den Hubübertragungsmechanismus, ohne dass ein Öffnen des Gehäuses des piezoelektrischen Generators nötig ist.

Gemäß einer weiteren Ausgestaltungsform kann eine der Piezoeinheit zugewandte Stirnseite des Übertragungsstifts zur Hubübertragung dauerhaft lose an der Piezoeinheit oder an einem Aufnahmebehälter zur Aufnahme der Piezoeinheit anliegen.

Gemäß einer weiteren Ausgestaltungsform sind mehrere Piezoeinheiten umfangseitig vom Gehäuse verteilt angeordnet, die jeweils über eine zugeordnete Hubübertragungseinrichtung in Wirkverbindung mit der Exzenterwelle stehen. Ferner kann die Piezoeinheit ein oder mehrere Piezoelemente umfassen und/oder als Piezo-Stack ausgebildet sein. Insbesondere können die Piezoeinheiten dabei in einer mehrlagigen mechanischen Reihenanordnung einzelner Piezoelemente ausgebildet sein. All diese Ausführungsformen haben den Vorteil, dass die pro Umdrehung der Exzenterwelle erzeugte elektrische Energie erhöht wird.

Gemäß einem allgemeinen Beispiel, das nicht unter den Gegenstand der Erfindung fällt, wird ein piezoelektrischer Generator bereitgestellt, der mindestens eine Piezoeinheit, die zur Erzeugung eines Wechselstroms verspannbar ist, eine antreibbare, das Verspannen steuernde Exzenterwelle und eine Hubübertragungseinrichtung, über die die Piezoeinheit in Wirkverbindung mit der Exzenterwelle steht, so dass die Piezoeinheit im Wesentlichen in Radialrichtung zur Drehachse der Exzenterwelle verspannbar ist, umfasst. Darüber hinaus umfasst der piezoelektrische Generator ein um die Exzenterwelle angeordnetes Gehäuse, an dem die Piezoeinheit mittels einer Montageeinrichtung befestigt ist.

Gemäß diesem allgemeinen, nicht erfindungsgemäßen Beispiel weist die Hubübertragungseinrichtung einen federnd verspannten, in Radialrichtung zur Drehachse der Exzenterwelle beweglich geführten Übertragungsstift und eine Führungshülse, in der der Übertragungsstift beweglich geführt ist, auf. Gemäß Ausführungsbeispielen des zweiten allgemeinen Gesichtspunkts der Erfindung können die Piezoeinheit, das Gehäuse und die Hubübertragungseinrichtung wie vorstehend beschrieben ausgeführt sein. Die Anordnung der Piezoeinheit außerhalb des Gehäuses und dass die Hubübertragungseinrichtung über eine Durchgangsöffnung im Gehäuse in Wirkverbindung mit der Piezoeinheit steht, ist möglich, aber nicht zwingend erforderlich.

Ein besonderer Aspekt des allgemeinen Beispiels liegt darin, dass eine der Piezoeinheit zugewandte Stirnseite des Übertragungsstifts zur Hubübertragung an der Piezoeinheit oder, wenn die Piezoeinheit in einem Aufnahmebehälter aufgenommen ist, an dem Aufnahmebehälter dauerhaft lose anliegt. "Dauerhaft" bedeutet, dass die Stirnseite auch während der Hubübertragung ständig in Kontakt mit der Piezoeinheit oder dem Aufnahmebehälter ist. Hierbei drückt eine Feder den Übertragungsstift zur Ausbildung des Wirkkontaktes an. Dies bietet den besonderen Vorzug, dass der Übertragungsstift zur Hubübertragung nicht an die Piezoeinheit oder den die Piezoeinheit aufnehmenden Aufnahmebehälter anschlägt, sondern stets schon anliegt. Dadurch können Beschädigungen durch das Anschlagen zuverlässig vermieden werden.

Ferner kann eine der Exzenterwelle zugewandte Stirnseite des Übertragungsstifts zur Hubübertragung dauerhaft lose an der Exzenterwelle oder an einem die Exzenterwelle umgebenden Lager anliegen.

Es wird nochmals betont, dass gemäß dem nicht erfindungsgemäßen allgemeinen Beispiels es möglich, aber nicht erforderlich ist, dass die Piezoeinheit(en) außerhalb des Gehäuses angeordnet ist (sind). Die vorstehend genannten Aspekte des ersten allgemeinen Gesichtspunkts der Erfindung, insbesondere auch die Ausführungsformen, sind jedoch auch mit dem allgemeinen Beispiel kombinierbar.

Die Erfindung betrifft ferner ein Kraftfahrzeug, insbesondere Nutzfahrzeug, das einen piezoelektrischen Generator wie in diesem Dokument beschrieben umfasst.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben.

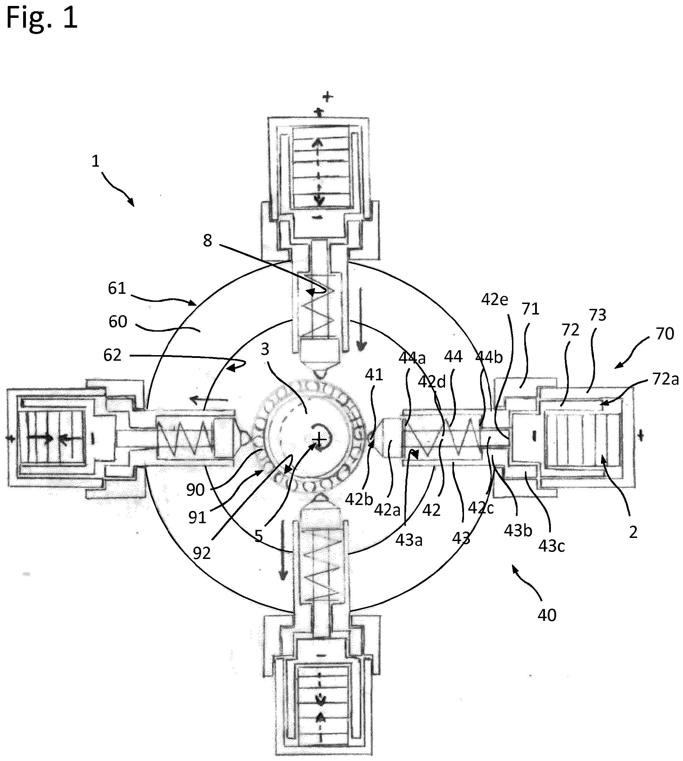

Figur 1 zeigt in einer schematischen Schnittzeichnung ein Ausführungsbeispiel des piezoelektrischen Generators 1 senkrecht zur Drehachse 5 der Exzenterwelle 3. Der Generator weist dabei eine um eine Drehachse 5 drehbare Exzenterwelle 3 in Form einer exzentrisch gelagerten Welle mit kreisförmigen Querschnitt auf. Mittels dieser Exzenterwelle 3 wird eine Rotationsbewegung um die Drehachse 5 in eine Hubbewegung in radialer Richtung umgewandelt. Der Hub beträgt im vorliegenden Beispiel etwa 3 Millimeter. Die Exzenterwelle 3 wird dabei von einem koaxial zu ihrer Drehachse 5 angeordneten zylinderförmigen Gehäuse 60 umschlossen, das vier über den Umfang des Gehäuses 60 verteilte und um jeweils 90° versetzte zylinderförmige Durchgangsöffnungen 8 aufweist. Im Bereich dieser Durchgangsöffnungen 8 sind mittels jeweiliger Montageeinrichtungen 70 vier baugleiche Hubübertragungseinrichtungen 40 samt Piezoeinheiten 2 angebracht. Die Piezoeinheiten 2 sind hierbei jeweils als Piezo-Stack, d. h. als eine mehrlagige Reihenanordnung einzelner Piezoelemente, ausgebildet. Diese befinden sich außerhalb des Gehäuses 60 und werden über die sich durch die Durchgangsöffnungen 8 erstreckenden Hubübertragungseinrichtungen 40 an die Exzenterwelle 3 gekoppelt. Aus Gründen der Übersichtlichkeit ist dabei nur jeweils eine der vier Piezoeinheiten 2 und Hubübertragungseinrichtungen 40 mit Bezugszeichen versehen.

Jede der Hubübertragungseinrichtungen 40 umfasst eine im Wesentlichen hohlzylinderförmige Führungshülse 43, die sich durch die Durchgangsöffnung 8 erstreckt und in radialer Richtung sowohl nach innen über die innere Gehäusewand 62 als auch nach außen über die äußere Gehäusewand 61 übersteht. An ihrem piezoseitigen Endbereich besitzt die Führungshülse 43 einen Vorsprung 43b in Form eines abschnittsweisen Bereichs mit einem kleineren Innendurchmesser sowie ein flanschförmig ausgebildetes Endteil 43c mit größerem Außendurchmesser als die sonstige Führungshülse 43. Dieses Endteil 43c befindet sich dabei in einem größeren radialen Abstand zur Drehachse 5 der Exzenterwelle 3 als die äußere Gehäusewand 61 und dient zum Befestigen eines zylinderförmigen Bechers, der einen Aufnahmebehälterdeckel 73 für die Piezoeinheit 2 darstellt. Die Befestigung erfolgt hierbei über eine Arretierung 71 in Form einer Klemmschelle, die den zylinderförmigen Becher gegen die Führungshülse 43 verspannt, wobei zur besseren Fixierung die Klemmschelle an einem Ende mittels eines Ringstegs das flanschförmig ausgebildete Endteil der Führungshülse 43c umfasst und an ihrem anderen Ende eine Aufnahme für den Aufnahmebehälterdeckel 73 aufweist.

In der vorliegenden Ausführung umfasst die Hubübertragungseinrichtung 40 zudem einen die Piezoeinheit 2 umgebenden zweiten zylinderförmigen Becher, der beweglich montiert ist und der einen inneren Aufnahmebehälter 72 für die Piezoeinheit 2 darstellt. Dessen Innendurchmesser ist hierbei so gewählt, dass der Becher die ebenfalls zylinderförmige Piezoeinheit 2 nahezu formschlüssig umgibt, wodurch tangentiale oder axiale Verschiebungen auf die Piezoeinheit 2 verhindert werden. Um im Betrieb ein Verspannen der Piezoeinheit 2 zu gewährleisten, ist der Aufnahmebehälter 72 zudem so dimensioniert, dass im eingebauten Zustand die Piezoeinheit 2 in radialer Richtung über den Becherrand 72a ragt. In der vorliegenden Ausführungsform stehen die Piezoeinheiten 2 etwa 1 Millimeter über den Becherrand 72a. Durch das Verspannen bzw. Druckbelasten der Piezoeinheiten 2 im Betrieb wird über Ladungsverschiebungen im Inneren der Piezoeinheiten eine Spannung erzeugt, die dann an deren Oberfläche abgegriffen werden kann.

Zur Übertragung des das Verspannen steuernden Hubs der Exzenterwelle 3 an die Piezoeinheit 2 steht der der Exzenterwelle 3 zugewandte Boden des Aufnahmebehälters 72 in mechanischem Kontakt mit dem federnd verspannten beweglichen Übertragungsstift 42, der dauerhaft lose am Boden anliegt. Dieser im vorliegenden Beispiel zylinderförmige Stift weist in Längsrichtung zwei Abschnitte mit verschiedenen Durchmessern auf. Ein erster Abschnitt mit kleinerem Durchmesser steht dabei mit dem Boden des inneren Aufnahmebehälters 72 in mechanischem Kontakt und ist gleitend an dem Vorsprung der Führungshülse 43b geführt. An diesen ersten Abschnitt des Übertragungsstiftes schließt sich ein der Exzenterwelle 3 zugewandter Endbereich des Übertragungsstifts 42a an, der gleitend an der Innenfläche der Führungshülse 43a geführt ist. Durch diese Führung erhöht sich einerseits die Stabilität der Hubübertragungseinrichtung, andererseits werden wiederum tangentiale oder axiale Verschiebungen verhindert. Der zylinderförmige Bereich des Übertragungsstiftes 42 mit kleinerem Durchmesser wird zudem von einer Spiralfeder 44 umgeben, deren exzenterwellenseitiges Federende 44a sich am Endbereich des Übertragungsstifts 42a und deren piezoseitiges Federende 44b sich am Vorsprung der Führungshülse 43b abstützt. Dadurch wird eine federnd verspannte Lagerung des Übertragungsstifts realisiert, wobei eine rückstellende Federkraft in Richtung Exzenterwelle 3 wirkt.

Um für eine optimale verschleißfreie Kraftübertragung zwischen Exzenterwelle 3 und Übertragungsstifts 42 zu sorgen sowie zur besseren Führung des Übertragungsstifts 42, ist die Exzenterwelle 3 von einem Wälzlager 90 umgeben, dessen Außenring 91 eine Führungsnut aufweist, in die eine in die exzenterwellenseitige Stirnfläche des Übertragungsstiftes 42b eingepresste Kugel 41 geführt wird. Der Übertragungsstift liegt somit über die Kugel dauerhaft lose an dem Lager an. Während der Innenring 92 des Wälzlagers 90 fest auf der Exzenterwelle 3 sitzt und sich somit mit der Exzenterwelle 3 dreht, ist der verformbare Außenring 91 des Wälzlagers 90 drehfest zum Gehäuse 60 angeordnet. Durch die Deformation des Außenrings 91 wird dabei ein Hubübertrag an den Übertragungsmechanismus 40 erreicht, während gleichzeitig durch die drehfeste Anordnung Reibungsverluste sowie tangentiale Scherkräfte und damit ein Verschleiß der Übertragungsstifte 42 vermieden werden. Der piezoelektrische Generator 1 funktioniert damit weitgehend verschleißfrei und hält auch hohen Drehzahlen stand.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Piezoelektrischer Generator
- 2: Piezoeinheit
- 3: Exzenterwelle
- 40: Hubübertragungseinrichtung
- 41: Kugel
- 42: Übertragungsstift
- 42a: Innerer Endbereich des Übertragungsstifts
- 42b: Stirnseite des Übertragungsstifts
- 42c: Äußerer Endbereich des Übertragungsstifts
- 42d: Äußerer Abschnitt des Übertragungsstifts
- 42e: Stirnseite des Übertragungsstifts
- 43: Führungshülse
- 43a: Innenwandung der Führungshülse
- 43b: Vorsprung der Führungshülse
- 43c: Endbereich der Führungshülse
- 44: Feder
- 44a: Erstes Federende
- 44b: Zweites Federende
- 5: Drehachse
- 60: Gehäuse
- 61: Äußere Gehäusewand
- 62: Innere Gehäusewand
- 70: Montageeinrichtung
- 71: Arretierung
- 72: Aufnahmebehälter
- 72a: Rand des Aufnahmebehälters
- 73: Aufnahmebehälterdeckel
- 8: Durchgangsöffnung
- 90: Wälzlager
- 91: Außenring des Wälzlagers
- 92: Innenring des Wälzlagers

## Patentansprüche

1. Piezoelektrischer Generator (1), umfassend
- eine Piezoeinheit (2), die zur Erzeugung eines Wechselstroms verspannbar ist;
- eine antreibbare, das Verspannen steuernde Exzenterwelle (3);
- eine Hubübertragungseinrichtung (40), über die die Piezoeinheit (2) in Wirkverbindung mit der Exzenterwelle (3) steht, so dass die Piezoeinheit (2) im Wesentlichen in Radialrichtung zur Drehachse (5) der Exzenterwelle (3) verspannbar ist; und
- ein um die Exzenterwelle (3) angeordnetes Gehäuse (60), an dem die Piezoeinheit (2) mittels einer Montageeinrichtung (70) befestigt ist, wobei
a) die Piezoeinheit (2) außerhalb des Gehäuses (60) angeordnet ist; und
b) die Hubübertragungseinrichtung (40) über eine Durchgangsöffnung (8) im Gehäuse (60) in Wirkverbindung mit der Piezoeinheit (2) steht;
**dadurch gekennzeichnet,**
c) **dass** die Hubübertragungseinrichtung (40) einen federnd verspannten, in Radialrichtung zur Drehachse (5) der Exzenterwelle (3) beweglich geführten Übertragungsstift (42) und eine Führungshülse (43), in der der Übertragungsstift (42) beweglich geführt ist und die am Gehäuse (60) im Bereich der Durchgangsöffnung (8) befestigt ist, aufweist.

2. Piezoelektrischer Generator (1) nach Anspruch 1, **dadurch gekennzeichnet,**
a) **dass** sich die Führungshülse (43) durch die Durchgangsöffnung (8) erstreckt und ein der Piezoeinheit (2) zugewandter Endbereich (43c) der Führungshülse (43) au-ßerhalb des Gehäuses (60) endet; und/oder
b) **dass** der Übertragungsstift (42) sich durch die Durchgangsöffnung (8) erstreckt und ein der Piezoeinheit (2) zugewandter Endbereich (42c) des Übertragungsstifts (42) außerhalb des Gehäuses (60) endet.

3. Piezoelektrischer Generator (1) nach Anspruch 1 oder 2, **dadurch gekennzeichnet, dass** die Hubübertragungseinrichtung (40) eine Feder (44) aufweist, die den Übertragungsstift (42) umgibt, wobei ein erstes Federende (44a) an einem der Exzenterwelle (3) zugewandten Endbereich (42a) des Übertragungsstifts (42) befestigt ist und ein zweites Federnende (44b) an der Führungshülse (43) befestigt ist, um den Übertragungsstift (42) gegen die Führungshülse (43) zu verspannen.

4. Piezoelektrischer Generator (1) nach Anspruch 3, **dadurch gekennzeichnet, dass** der der Exzenterwelle (3) zugewandte Endbereich (42a) des Übertragungsstifts (42) gleitend an einer Innenwandung (43a) der Führungshülse (43) geführt ist und sich an diesen Endbereich (42a) des Übertragungsstifts (42) ein zweiter Abschnitt (42d) mit einer kleineren Querschnittsfläche anschließt, der von der Feder (44) umgeben ist.

5. Piezoelektrischer Generator (1) nach Anspruch 3 oder 4, **dadurch gekennzeichnet, dass** sich das erste Federende (44a) an dem der Exzenterwelle (3) zugewandten Endbereich (42a) des Übertragungsstifts (42) abstützt und/oder dass sich das zweite Federende (44b) an einem Vorsprung (43b) eines der Piezoeinheit (2) zugewandten Endbereichs der Führungshülse (43) abstützt.

6. Piezoelektrischer Generator (1) nach einem der vorhergehenden Ansprüche, **dadurch gekennzeichnet, dass** eine der Exzenterwelle (3) zugewandte Stirnseite (42b) des Übertragungsstifts (42) eine Kugel (41) aufweist, mittels derer der Übertragungsstift (42) auf einem die Exzenterwelle (2) umgebenden Lager, insbesondere einem Wälzlager (90), in Wirckontakt steht.

7. Piezoelektrischer Generator (1) nach einem der vorhergehenden Ansprüche, **dadurch gekennzeichnet, dass** das Gehäuse (60)
a) hohlzylinderförmig ist und/oder einen ringförmigen Querschnitt senkrecht zur Drehachse (5) der Exzenterwelle (3) aufweist; und/oder
b) die Exzenterwelle (3) lediglich abschnittsweise umgibt.

8. Piezoelektrischer Generator (1) nach einem der vorhergehenden Ansprüche, **dadurch gekennzeichnet, dass** die Hubübertragungseinrichtung (40) ein um die Exzenterwelle (3) angeordnetes Lager, insbesondere ein Wälzlager (90), zur Kraftübertragung zwischen Exzenterwelle (3) und Übertragungsstift (42) aufweist, wobei der der Exzenterwelle (3) zugewandte Endbereich (42a) des Übertragungsstifts (42) in Wirkkontakt mit dem Lager steht.

9. Piezoelektrischer Generator (1) nach Anspruch 8, **dadurch gekennzeichnet, dass** das Lager eine Nut aufweist, in die der der Exzenterwelle (3) zugewandte Endbereich (42a) des Übertragungsstifts (42) eingreift.

10. Piezoelektrischer Generator (1) nach den Ansprüchen 6 und 9, **dadurch gekennzeichnet, dass** die Kugel (41) in die Nut eingreift.

11. Piezoelektrischer Generator (1) nach einem der vorhergehenden Ansprüche, **dadurch gekennzeichnet, dass** die Montageeinrichtung (70) einen Aufnahmebehälter (72) und einen den Aufnahmebehälter (72) verschließbaren Aufnahmebehälterdeckel (73) umfasst.

12. Piezoelektrischer Generator (1) nach Anspruch 11, **dadurch gekennzeichnet,**
a) **dass** der Aufnahmebehälter (72) so dimensioniert ist, dass die Piezoeinheit (2) bei Einlegen in den Aufnahmebehälter (72) über den dem Aufnahmebehälterdeckel (73) zugewandten Rand (72a) des Aufnahmebehälters (72) herausragt und im mit dem Aufnahmebehälterdeckel (73) verschlossenen Zustand des Aufnahmebehälters (72) die Piezoeinheit durch den Aufnahmebehälterdeckel (73) zum Vorverspannen der Piezoeinheit (2) einem Anpressdruck ausgesetzt ist; und/oder
b) **dass** der Aufnahmebehälter (72) und/oder der Aufnahmebehälterdeckel (73) becherförmig ausgebildet ist; und/oder
c) **dass** Mittel vorgesehen sind, mittels derer eine Vorspannung der Piezoeinheit (2) im Aufnahmebehälter (72) variabel festlegbar ist.

13. Piezoelektrischer Generator (1) nach einem der Ansprüche 11 oder 12, **dadurch gekennzeichnet,**
a) **dass** ein der Exzenterwelle (3) zugewandter Endbereich des Aufnahmebehälters (72) in einer hierzu formkorrespondierenden Aufnahme der Führungshülse (43) gehaltert ist und in Wirkkontakt mit dem Übertragungsstift (42) steht, wobei eine der Piezoeinheit zugewandte Stirnseite (42e) des Übertragungsstifts (42) dauerhaft lose an dem der Exzenterwelle (3) zugewandten Endbereich des Aufnahmebehälters (72) anliegt; und/oder
b) **dass** die Montageeinrichtung (70) eine Arretierung (71) umfasst, durch welche der Aufnahmebehälterdeckel (73) an der Führungshülse (43) befestigt ist.

14. Piezoelektrischer Generator (1) nach einem der vorhergehenden Ansprüche, **dadurch gekennzeichnet, dass** eine der Piezoeinheit zugewandte Stirnseite (42e) des Übertragungsstifts (42) zur Hubübertragung dauerhaft lose an der Piezoeinheit (2) oder an einem Aufnahmebehälter (72) zur Aufnahme der Piezoeinheit anliegt.

15. Piezoelektrischer Generator (1) nach einem der vorhergehenden Ansprüche, **dadurch gekennzeichnet,**
a) **dass** mehrere Piezoeinheiten (2) umfangseitig vom Gehäuse (60) verteilt angeordnet sind, die jeweils über eine zugeordnete Hubübertragungseinrichtung (40) in Wirkverbindung mit der Exzenterwelle (3) stehen; und/oder
b) **dass** die Piezoeinheit (2) ein oder mehrere Piezoelemente umfasst und/oder als Piezo-Stack ausgebildet ist.

16. Kraftfahrzeug, insbesondere Nutzfahrzeug, umfassend einen piezoelektrischen Generator (1) nach einem der vorhergehenden Ansprüche.

## Claims

1. A piezoelectric generator (1), comprising
- a piezo unit (2), which can be stressed to generate an alternating current;
- a drivable eccentric shaft (3), controlling the stressing;
- a stroke transmission device (40), by way of which the piezo unit (2) is in operative connection with the eccentric shaft (3), so that the piezo unit (2) can be stressed substantially in a radial direction in relation to the axis of rotation (5) of the eccentric shaft (3); and
- a housing (60), which is arranged around the eccentric shaft (3) and on which the piezo unit (2) is fastened by means of a mounting device (70), wherein
a) the piezo unit (2) is arranged outside the housing (60); and
b) the stroke transmission device (40) is in operative connection with the piezo unit (2) by way of a through-opening (8) in the housing (60);
**characterized**
c) **in that** the stroke transmission device (40) has a resiliently stressed transmission pin (42), guided movably in a radial direction in relation to the axis of rotation (5) of the eccentric shaft (3), and a guide sleeve (43), in which the transmission pin (42) is movably guided and which is fastened on the housing (60) in the region of the through-opening (8).

2. The piezoelectric generator (1) according to Claim 1, **characterized**
a) **in that** the guide sleeve (43) extends through the through-opening (8) and an end region (43c) of the guide sleeve (43) that is facing the piezo unit (2) ends outside the housing (60); and/or
b) **in that** the transmission pin (42) extends through the through-opening (8) and an end region (42c) of the transmission pin (42) that is facing the piezo unit (2) ends outside the housing (60).

3. The piezoelectric generator (1) according to Claim 1 or 2, **characterized in that** the stroke transmission device (40) has a spring (44), which surrounds the transmission pin (42), wherein a first spring end (44a) is fastened on an end region (42a) of the transmission pin (42) that is facing the eccentric shaft (3) and a second spring end (44b) is fastened on the guide sleeve (43), in order to stress the transmission pin (42) against the guide sleeve (43).

4. The piezoelectric generator (1) according to Claim 3, **characterized in that** the end region (42a) of the transmission pin (42) that is facing the eccentric shaft (3) is guided in a sliding manner on an inner wall (43a) of the guide sleeve (43) and this end region (42a) of the transmission pin (42) is adjoined by a second portion (42d) with a smaller cross-sectional area, which is surrounded by the spring (44).

5. The piezoelectric generator (1) according to Claim 3 or 4, **characterized in that** the first spring end (44a) is supported on the end region (42a) of the transmission pin (42) that is facing the eccentric shaft (3) and/or in that the second spring end (44b) is supported on a projection (43b) of an end region of the guide sleeve (43) that is facing the piezo unit (2).

6. The piezoelectric generator (1) according to one of the preceding claims, **characterized in that** an end face (42b) of the transmission pin (42) that is facing the eccentric shaft (3) has a ball (41), by means of which the transmission pin (42) is in operative contact on a bearing, in particular a rolling bearing (90), surrounding the eccentric shaft (2).

7. The piezoelectric generator (1) according to one of the preceding claims, **characterized in that** the housing (60)
a) is in the form of a hollow cylinder and/or has an annular cross section perpendicularly to the axis of rotation (5) of the eccentric shaft (3); and/or
b) only surrounds some portions of the eccentric shaft (3) .

8. The piezoelectric generator (1) according to one of the preceding claims, **characterized in that** the stroke transmission device (40) has a bearing, in particular a rolling bearing (90), arranged around the eccentric shaft (3) for the force transmission between the eccentric shaft (3) and the transmission pin (42), wherein the end region (42a) of the transmission pin (42) that is facing the eccentric shaft (3) is in operative contact with the bearing.

9. The piezoelectric generator (1) according to Claim 8, **characterized in that** the bearing has a groove, in which the end region (42a) of the transmission pin (42) that is facing the eccentric shaft (3) engages.

10. The piezoelectric generator (1) according to Claims 6 and 9, **characterized in that** the ball (41) engages in the groove.

11. The piezoelectric generator (1) according to one of the preceding claims, **characterized in that** the mounting device (70) comprises a receiving container (72) and a receiving container cover (73) that can close the receiving container (72).

12. The piezoelectric generator (1) according to Claim 11, **characterized**
a) **in that** the receiving container (72) is dimensioned in such a way that, when it is placed into the receiving container (72), the piezo unit (2) protrudes beyond the edge (72a) of the receiving container (72) that is facing the receiving container cover (73) and, in the state of the receiving container (72) in which it is closed by the receiving container cover (73), the piezo unit is exposed to a pressing pressure by the receiving container cover (73) for prestressing the piezo unit (2); and/or
b) **in that** the receiving container (72) and/or the receiving container cover (73) takes the form of a cup; and/or
c) **in that** means are provided by which a prestressing of the piezo unit (2) in the receiving container (72) can be variably fixed.

13. The piezoelectric generator (1) according to either of Claims 11 and 12, **characterized**
a) **in that** an end region of the receiving container (72) that is facing the eccentric shaft (3) is secured in a receptacle of a corresponding shape of the guide sleeve (43) and is in operative contact with the transmission pin (42), wherein an end face (42e) of the transmission pin (42) that is facing the piezo unit permanently lies loosely against the end region of the receiving container (72) that is facing the eccentric shaft (3); and/or
b) **in that** the mounting device (70) comprises an arresting means (71), by which the receiving container cover (73) is fastened on the guide sleeve (43).

14. The piezoelectric generator (1) according to one of the preceding claims, **characterized in that** an end face (42e) of the transmission pin (42) that is facing the piezo unit for the stroke transmission, permanently lies loosely against the piezo unit (2) or against the receiving container (72) for receiving the piezo unit.

15. The piezoelectric generator (1) according to one of the preceding claims, **characterized**
a) **in that** arranged circumferentially around the housing (60) are a number of piezo units (2), which are in each case in operative connection with the eccentric shaft (3) by way of an assigned stroke transmission device (40); and/or
b) **in that** the piezo unit (2) comprises one or more piezo elements and/or is formed as a piezo stack.

16. A motor vehicle, in particular a commercial vehicle, comprising a piezoelectric generator (1) according to one of the preceding claims.

## Revendications

1. Générateur piézoélectrique (1), comprenant :
- une unité piézoélectrique (2), qui peut être déformée pour générer un courant alternatif ;
- un arbre excentrique entraînable (3), commandant la déformation ;
- un appareil de transmission de course (40), par l'intermédiaire duquel l'unité piézoélectrique (2) se trouve en liaison fonctionnelle avec l'arbre excentrique (3), de telle sorte que l'unité piézoélectrique (2) puisse être déformée essentiellement dans la direction radiale par rapport à l'axe de rotation (5) de l'arbre excentrique (3) ; et
- un boîtier (60) agencé autour de l'arbre excentrique (3), auquel l'unité piézoélectrique (2) est fixée au moyen d'un appareil de montage (70),
a) l'unité piézoélectrique (2) étant agencée à l'extérieur du boîtier (60) ; et
b) l'appareil de transmission de course (40) se trouvant en liaison fonctionnelle avec l'unité piézoélectrique (2) par l'intermédiaire d'une ouverture de passage (8) dans le boîtier (60) ;
**caractérisé en ce que**
c) l'appareil de transmission de course (40) comprend une tige de transmission (42) déformée élastiquement, guidée de manière mobile dans la direction radiale par rapport à l'axe de rotation (5) de l'arbre excentrique (3), et une douille de guidage (43), dans laquelle la tige de transmission (42) est guidée de manière mobile et qui est fixée au boîtier (60) dans la zone de l'ouverture de passage (8).

2. Générateur piézoélectrique (1) selon la revendication 1, **caractérisé en ce que**
a) la douille de guidage (43) s'étend à travers l'ouverture de passage (8) et une zone d'extrémité (43c), tournée vers l'unité piézoélectrique (2), de la douille de guidage (43), termine à l'extérieur du boîtier (60) ; et/ou
b) la tige de transmission (42) s'étend à travers l'ouverture de passage (8) et une zone d'extrémité (42c), tournée vers l'unité piézoélectrique (2), de la tige de transmission (42) termine à l'extérieur du boîtier (60).

3. Générateur piézoélectrique (1) selon la revendication 1 ou 2, **caractérisé en ce que** l'appareil de transmission de course (40) comprend un ressort (44), qui entoure la tige de transmission (42), une première extrémité de ressort (44a) étant fixée à une zone d'extrémité (42a), tournée vers l'arbre excentrique (3), de la tige de transmission (42) et une deuxième extrémité de ressort (44b) étant fixée à la douille de guidage (43), afin de déformer la tige de transmission (42) contre la douille de guidage (43).

4. Générateur piézoélectrique (1) selon la revendication 3, **caractérisé en ce que** la zone d'extrémité (42a), tournée vers l'arbre excentrique (3), de la tige de transmission (42) est guidée de manière coulissante sur une paroi intérieure (43a) de la douille de guidage (43) et une deuxième section (42d) ayant une surface de section transversale plus petite, qui est entourée par le ressort (44), est contiguë à cette zone d'extrémité (42a) de la tige de transmission (42).

5. Générateur piézoélectrique (1) selon la revendication 3 ou 4, **caractérisé en ce que** la première extrémité de ressort (44a) s'appuie sur la zone d'extrémité (42a), tournée vers l'arbre excentrique (3), de la tige de transmission (42), et/ou **en ce que** la deuxième extrémité de ressort (44b) s'appuie sur une saillie (43b) d'une zone d'extrémité, tournée vers l'unité piézoélectrique (2), de la douille de guidage (43) .

6. Générateur piézoélectrique (1) selon l'une quelconque des revendications précédentes, **caractérisé en ce qu**'un côté frontal (42b), tourné vers l'arbre excentrique (3), de la tige de transmission (42) comprend une bille (41), au moyen de laquelle la tige de transmission (42) se trouve en contact fonctionnel sur un palier entourant l'arbre excentrique (2), notamment un palier à roulement (90).

7. Générateur piézoélectrique (1) selon l'une quelconque des revendications précédentes, **caractérisé en ce que** le boîtier (60)
a) est de forme cylindrique creuse et/ou présente une section transversale de forme annulaire perpendiculairement à l'axe de rotation (5) de l'arbre excentrique (3) ; et/ou
b) entoure uniquement en sections l'arbre excentrique (3) .

8. Générateur piézoélectrique (1) selon l'une quelconque des revendications précédentes, **caractérisé en ce que** l'appareil de transmission de course (40) comprend un palier agencé autour de l'arbre excentrique (3), notamment un palier à roulement (90), pour la transmission de force entre l'arbre excentrique (3) et la tige de transmission (42), la zone d'extrémité (42a), tournée vers l'arbre excentrique (3), de la tige de transmission (42) se trouvant en contact fonctionnel avec le palier.

9. Générateur piézoélectrique (1) selon la revendication 8, **caractérisé en ce que** le palier comprend une rainure, dans laquelle la zone d'extrémité (42a), tournée vers l'arbre excentrique (3), de la tige de transmission (42) pénètre.

10. Générateur piézoélectrique (1) selon les revendications 6 et 9, **caractérisé en ce que** la bille (41) pénètre dans la rainure.

11. Générateur piézoélectrique (1) selon l'une quelconque des revendications précédentes, **caractérisé en ce que** l'appareil de montage (70) comprend un contenant de réception (72) et un couvercle de contenant de réception (73) pouvant fermer le contenant de réception (72).

12. Générateur piézoélectrique (1) selon la revendication 11, **caractérisé en ce que**
a) le contenant de réception (72) est dimensionné de telle sorte que, lors de l'insertion dans le contenant de réception (72), l'unité piézoélectrique (2) dépasse au-dessus du bord (72a), tourné vers le couvercle de contenant de réception (73), du contenant de réception (72) et que, dans l'état fermé avec le couvercle de contenant de réception (73) du contenant de réception (72), l'unité piézoélectrique soit exposée à une pression de serrage par le couvercle de contenant de réception (73) pour la déformation préliminaire de l'unité piézoélectrique (2) ; et/ou
b) le contenant de réception (72) et/ou le couvercle de contenant de réception (73) sont configurés en forme de cuvette ; et/ou
c) des moyens sont prévus, au moyen desquels une déformation de l'unité piézoélectrique (2) dans le contenant de réception (72) peut être établie de manière variable.

13. Générateur piézoélectrique (1) selon l'une quelconque des revendications 11 ou 12, **caractérisé en ce que**
a) une zone d'extrémité, tournée vers l'arbre excentrique (3), du contenant de réception (72) est maintenue dans un logement de forme correspondante de la gaine de guidage (43) et se trouve en contact fonctionnel avec la tige de transmission (42), un côté frontal (42e), tourné vers l'unité piézoélectrique, de la tige de transmission (42) étant appliqué durablement de manière lâche sur la zone d'extrémité, tournée vers l'arbre excentrique (3), du contenant de réception (72) ; et/ou
b) l'appareil de montage (70) comprend un blocage (71), par lequel le couvercle de contenant de réception (73) est fixé à la douille de guidage (43).

14. Générateur piézoélectrique (1) selon l'une quelconque des revendications précédentes, **caractérisé en ce qu**'un côté frontal (42e), tourné vers l'unité piézoélectrique, de la tige de transmission (42), est appliqué pour la transmission de course durablement de manière lâche sur l'unité piézoélectrique (2) ou sur un contenant de réception (72) pour la réception de l'unité piézoélectrique.

15. Générateur piézoélectrique (1) selon l'une quelconque des revendications précédentes, **caractérisé en ce que**
a) plusieurs unités piézoélectriques (2) sont réparties sur la périphérie du boîtier (60), qui se trouvent chacune en liaison fonctionnelle avec l'arbre excentrique (3) par l'intermédiaire d'un appareil de transmission de course associé (40) ; et/ou
b) l'unité piézoélectrique (2) comprend un ou plusieurs éléments piézoélectriques et/ou est configurée en tant qu'empilement piézoélectrique.

16. Véhicule automobile, notamment véhicule utilitaire, comprenant un générateur piézoélectrique (1) selon l'une quelconque des revendications précédentes.
